# EUROPEAN PATENT APPLICATION

(11) **EP 2 464 158 A1**
(43) Date of publication of application: **13.06.2012**
(21) Application number: 09848063.5
(22) Date of filing: 07.08.2009
(51) Int. Cl.: H04W 24/00, H04W 16/26

(54) **BASE STATION DEVICE, DATA PROCESSING DEVICE AND MOBILE COMMUNICATION SYSTEM**

(71) Applicant: Fujitsu Limited, Kawasaki-shi, Kanagawa 211-8588 (JP)
(72) Inventor: NITTA, Daisuke, Kawasaki-shi Kanagawa 211-8588 (JP); SHINADA, Yuki, Kawasaki-shi Kanagawa 211-8588 (JP); KOBAYASHI, Kazunari, Kawasaki-shi Kanagawa 211-8588 (JP)
(74) Representative: Ward, James Norman
(86) International application number: PCT/JP2009/064004
(87) International publication number: WO 2011/016131

(57) **Abstract**

A base station apparatus includes a relay unit that relays communication data transmitted and received between a user terminal wirelessly connected to the base station apparatus itself, and a server apparatus connected to the base station apparatus itself through a public network; an extraction unit that extracts communication content information indicating content of communication between the user terminal and the server apparatus, from the communication data relayed by this relay unit; a condition obtaining unit that obtains a filtering condition for the user terminal; an analysis unit that filters a plurality of pieces of the communication content information extracted by the extraction unit, according to the filtering condition obtained by the condition obtaining unit; and a notification unit that notifies a wireless carrier network of communication content information obtained by the analysis unit applying the filtering condition.

## Description

### FIELD

The present invention relates to a communication data processing technique in a mobile communication system.

### BACKGROUND

In a cellular mobile communication system, each cell is made to cover a service area so that there is no location where communication may not be performed. However, there is a specific area, such as a tall building or an indoor location in a residential area, which is difficult to be covered by a normal base station disposed in each cell. Consequently, a small base station is disposed in such a specific small area to cover the specific area.

The small area covered by such a small base station may be referred to as "femto cell," "nano cell," "pico cell" or the like, and an area covered by the normal base station may be referred to as "macro cell." A base station apparatus covering this specific small area is referred to as "micro base station apparatus," "small-scale wireless base station," "home base station," "indoor base station," "HNB (Home Node B)," "HeNB (Home eNode B)" or the like. Hereinafter, the base station apparatus covering the specific small area is represented as "HNB apparatus," and a communication area covered by the HNB apparatus is represented as "femto cell." The HNB apparatus is installed, for example, in a standard house, and forms a femto cell of a size with a radius of approximately 10 meters (m).

With popularization of the HNB apparatus, data communication is performed by a cellular telephone and the like, also in the indoor location out of reach of radio waves in the macro cell. Thus, traffic in a wireless communication carrier (hereinafter, represented as "wireless carrier") network may increase. Consequently, in order to prevent the increase in the traffic in the wireless carrier network, an approach is proposed in which the HNB apparatus directly transfers communication data transmitted from a user, to a destination, not through wireless carrier equipment, but through a public network such as the Internet. This approach may be referred to as "local breakout," "packet data offload" or the like.

### [Patent document]

[Patent document 1] Japanese Patent Laid-Open No. 2008-109322
[Patent document 2] International Publication No. WO 2005/088953

However, when the communication data is transferred not through the wireless carrier equipment as in the above described conventional approach, the wireless carrier is not able to grasp communication content of the user. Since the communication content of the user includes significant marketing information, there is a situation where the wireless carrier hopes to obtain the marketing information included in this communication data.

On the other hand, the communication content of the user may also include personal information. Thus, it may not be preferable that the wireless carrier grasp all the communication content, from a viewpoint of personal information protection.

### SUMMARY

Accordingly, it is an object of one aspect of the present invention to realize a technique for providing communication content permitted by the user, in the communication content of the user, from the base station apparatus to the wireless carrier.

Respective aspects of the present invention employ configurations as follows, respectively.

According to an aspect of the present invention, a base station apparatus, including:
a relay unit that relays communication data transmitted and received between a user terminal wirelessly connected to the base station apparatus itself, and a server apparatus connected to the base station apparatus itself through a public network;
an extraction unit that extracts communication content information indicating content of communication between the user terminal and the server apparatus, from the communication data relayed by the relay unit;
a condition obtaining unit that obtains a filtering condition for the user terminal;
an analysis unit that filters a plurality of pieces of the communication content information extracted by the extraction unit, according to the filtering condition obtained by the condition obtaining unit; and
a notification unit that notifies a wireless carrier network of communication content information obtained by the analysis unit applying the filtering condition.

Another aspect relates to a data processing apparatus that is communicably connected to a plurality of such base station apparatuses, and this data processing apparatus includes a condition storage unit that stores a filtering condition for each user terminal; a condition transmission unit that transmits the filtering condition stored in the condition storage unit, to the plurality of base station apparatuses; and a reception unit that receives communication content information obtained by applying the filtering condition to communication content information extracted from the communication data transmitted and received between the user terminal and the server apparatus, from each of the plurality of base station apparatuses.

Furthermore, other aspects may be a mobile communication system including the plurality of base station apparatuses as described above and the data processing apparatus, a method and a program for achieving the configurations as described above, a computer-readable recording medium having recorded thereon this program, and the like.

According to the respective aspects described above, the communication content permitted by the user, in the communication content of the user, can be provided from the base station apparatus to the wireless carrier.

### BRIEF DESCRIPTION OF THE DRAWINGS

Fig. 1 illustrates a system configuration example of the mobile communication system in Example 1;
Fig. 2 is a block diagram illustrating a configuration example of the router 10, the HNB apparatus 11 and the user terminal 15 in the mobile communication system of Example 1;
Fig. 3 is a diagram illustrating an example of the communication content information stored in the communication content DB 42;
Fig. 4 is a diagram illustrating an example of the analysis result DB 43;
Fig. 5 is a diagram illustrating an example of the condition DB 40;
Fig. 6 is a diagram illustrating an example of the analysis result DB 43 after the filtering process;
Fig. 7 is a diagram illustrating an example of the filtering condition setting screen
Fig. 8 is a block diagram illustrating a process configuration of the base station control apparatus 2;
Fig. 9 is a sequence chart illustrating a process for saving the communication content information in Example 1;
Fig. 10 is a sequence chart illustrating the analysis process and the filtering process for the communication content information in Example 1;
Fig. 11 is a sequence chart illustrating a process for notifying the analysis result in Example 1;
Fig. 12 is a sequence chart illustrating a process for updating the filtering condition in Example 1.

### DESCRIPTION OF EMBODIMENT(s)

Hereinafter, a mobile communication system as an embodiment will be described by giving specific examples. Each Example given below is illustrative, and the present embodiment is not limited to a configuration of each Example as follows.

### [Example 1]

Hereinafter, the mobile communication system in Example 1 will be described.

### [System Configuration]

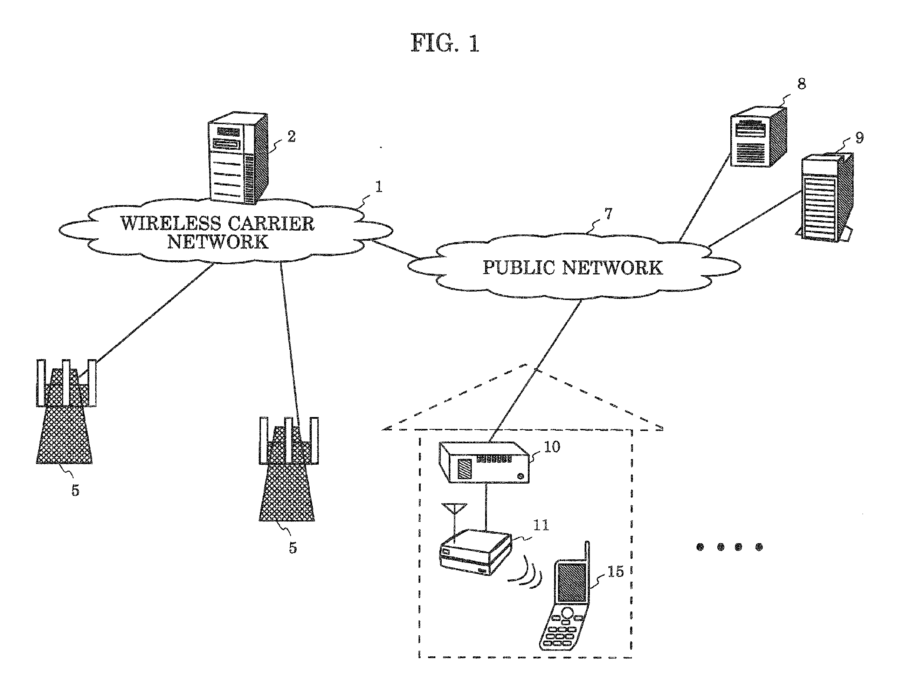

Fig. 1 illustrates a system configuration example of the mobile communication system in Example 1. As illustrated in Fig. 1, the mobile communication system in Example 1 includes a base station control apparatus 2, a base station apparatus (hereinafter, represented as "NB(NodeB) apparatus") 5, an HNB apparatus 11, a router 10, a DNS(Domain Name Server) server 8, a content server 9, a user terminal 15 and the like.

The NB apparatus 5 forms a macro cell depending on antenna characteristics and the like, and wirelessly communicates with the user terminal 15 within the macro cell. The NB apparatus 5 is connected to a wireless carrier network 1, and is controlled by the base station control apparatus 2 provided in the wireless carrier network 1. The base station control apparatus 2 provides communication services such as a telephone call service and a data communication service to the user terminal 15 through the NB apparatus 5.

The HNB apparatus 11 is installed in a specific area that may not be covered as a communication area by the NB apparatus 5, and forms a femto cell depending on antenna characteristics and the like. The HNB apparatus 11 wirelessly communicates with the user terminal 15 within the femto cell. The HNB apparatus 11 is connected to the wireless carrier network 1 through a public network 7 or a dedicated line (not illustrated), and provides the telephone call service to the user terminal 15 in response to control by the base station control apparatus 2.

Note that, in the present embodiment, a technique for providing a voice call service through the HNB apparatus 11, and a technique for providing various communication services through the NB apparatus 5 are not limited, and thus descriptions thereof will be simplified.

The content server 9 and the DNS server 8 are general servers connected to the public network 7. The public network 7 is, for example, the Internet. The content server 9 provides content data to the user terminal 15 in response to a request from the user terminal 15. The content server 9 is, for example, a WEB server, a file server or the like. The DNS server 8 operates as a general DNS server. If the DNS server 8 receives a request designating an IP(Internet Protocol) address, the DNS server 8 returns a domain name corresponding to the IP address. If the DNS server 8 receives a request designating a domain name, the DNS server 8 returns an IP address corresponding to the domain name. The present embodiment does not limit configurations of the content server 9 and the DNS server 8.

### [Apparatus Configuration]

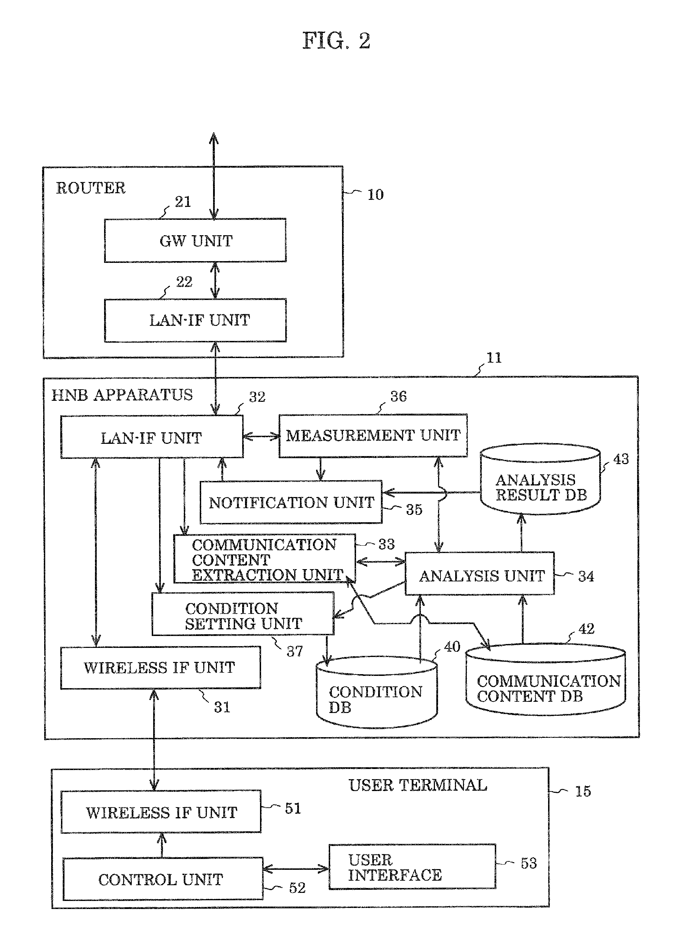

Fig. 2 is a block diagram illustrating a configuration example of the router 10, the HNB apparatus 11 and the user terminal 15 in the mobile communication system of Example 1. Hereinafter, configurations of the router 10, the HNB apparatus 11 and the user terminal 15, which are related to data communication, will be described.

The user terminal 15 is, for example, a cellular telephone, a Personal Digital Assistant (also referred to as "PDC" (Personal Digital Assistant)), a portable personal computer(PC) or the like. The user terminal 15 includes a wireless interface (IF) unit 51, a control unit 52, a user IF 53 and the like.

The user IF 53 is, for example, an operation button, a display, a microphone, a speaker and the like. The user IF 53 receives user input associated with a user operation, and outputs data received through the NB apparatus 5 or the HNB apparatus 11. The wireless IF unit 51 wirelessly communicates with the NB apparatus 5 or the HNB apparatus 11 according to a predetermined scheme.

The control unit 52 includes a CPU(Central Processing Unit), a RAM(Random Access Memory), a ROM(Read Only Memory) and the like. The control unit 52 executes the wireless communication with the NB apparatus 5 or the HNB apparatus 11 by controlling the wireless IF unit 51, the user IF 53 and the like. The control unit 52 performs data communication with the content server 9 through the wireless communication. For example, upon receiving content data transmitted from the content server 9, the control unit 52 causes the display to display this content data. Moreover, upon receiving input for requesting content data from a user, the control unit 52 causes the wireless IF unit 51 to transmit data associated with the input. Note that the user terminal 15 in Example 1 may have general functions as described above.

The router 10 includes a gateway (GW) unit 21, a LAN(Local Area Network) interface (hereinafter, represented as "LAN-IF") unit 22 and the like. The router 10 operates as a broadband router to connect the HNB apparatus 11 to the public network 7 via a communication line.

Specifically, the router 10 connects to the HNB apparatus 11 through the LAN-IF unit 22. The LAN-IF unit 22 controls, for example, an interface such as an Ethernet (Registered trademark) port or a serial port. The router 10 connects to the public network 7 through the GW unit 21. The GW unit 21 controls the communication line such as optical fiber or an ADSL (Asymmetric Digital Subscriber Line). The router 10 may accommodate a dedicated line for connecting to the wireless carrier network 1, within the GW unit 21. The connection between the HNB apparatus 11 and the wireless carrier network 1 may be made through the public network 7, or may be made through the dedicated line.

The router 10 receives communication data transmitted from the HNB apparatus 11, at the LAN-IF unit 22, and transmits this communication data through the GW unit 21 to the public network 7 or the wireless carrier network 1.

### [HNB Apparatus]

The HNB apparatus 11 includes a wireless IF unit 31, a LAN-IF unit 32, a communication content extraction unit 33, an analysis unit 34, a notification unit 35, a measurement unit 36, a condition setting unit 37, a condition database (DB) 40, a communication content DB 42, an analysis result DB 43 and the like. Each of these processing units of the HNB apparatus 11 is achieved as a software component, or a hardware component, or a combination thereof (see a section of [Others]).

The wireless IF unit 31 includes an antenna, a wireless circuit, an MAC (Media Access Control) circuit and the like, and achieves the wireless communication with the user terminal 15. Specifically, when upon receiving a wireless signal, the wireless IF unit 31 converts a high-frequency analog signal received at the antenna, into a digital baseband signal, and transmits data (voice data, packet data or the like) obtained by demodulating and decoding this digital baseband signal, to the LAN-IF unit 32. When transmitting a wireless signal, the wireless IF unit 31 receives transmitted data from the LAN-IF unit 32, generates a baseband signal by coding and modulating this transmitted data, and sends out an analog signal converted from this baseband signal, from the antenna.

The HNB apparatus 11 has a local breakout function. In other words, the HNB apparatus 11 directly transfers communication data transmitted from the user terminal 15, through the public network 7 to the content server 9 that is a destination, receives communication data transmitted from the content server 9, through the public network 7, and transmits this received communication data to the user terminal 15. This local breakout function is achieved by the LAN-IF unit 32.

The LAN-IF unit 32 provides an interface between the communication data processed by the wireless IF unit 31 and the communication data transmitted and received over the public network 7. Specifically, upon receiving the communication data from the wireless IF unit 31, the LAN-IF unit 32 converts this communication data into a data format conforming to a protocol for the public network 7. The LAN-IF unit 32 sends out this converted communication data to the communication line connected to the router 10. In a data format conversion process, for example, conversion to a predetermined data size, attachment of a header, and the like are performed. Note that if the communication data transmitted from the wireless IF unit 31 is telephone call data, the LAN-IF unit 32 performs a predetermined process to transmit this telephone call data through the router 10 to the wireless carrier network 1.

Upon receiving the communication data from the router 10, the LAN-IF unit 32 converts this communication data into a predetermined data format, and transmits the converted communication data to the wireless IF unit 31. Along with the above described process, the LAN-IF unit 32 also transmits the communication data transmitted from the wireless IF unit 31 and the communication data transmitted from the router 10, to the communication content extraction unit 33.

The communication content extraction unit 33 receives the communication data from the LAN-IF unit 32, and extracts communication content information from this communication data. The communication data is a data unit to be transmitted and received through the public network 7, such as a packet or a frame. The communication content information is obtained for each predetermined unit of communication. The predetermined unit of communication is, for example, a communication session, a communication connection or the like used as a unit of WWW(World Wide Web) access. The communication content extraction unit 33 obtains a user ID for specifying a user terminal that becomes one end of the communication data, address information on a connected server that becomes the other end of the communication data, a connection start time and a connection end time of the communication, and data of communication content itself, as this communication content information. The data of the communication content itself is payload data that is the communication data excluding various headers, and is hereinafter represented as "communication content data."

If an example of WEB access from the user terminal 15 to the content server 9 is given, the IP address of the content server 9 is obtained as the address information on the connected server. As the communication content data, HTTP(Hyper Text Transfer Protocol) request data and HTTP response data are obtained. The communication content extraction unit 33 stores the extracted communication content information into the communication content DB 42.

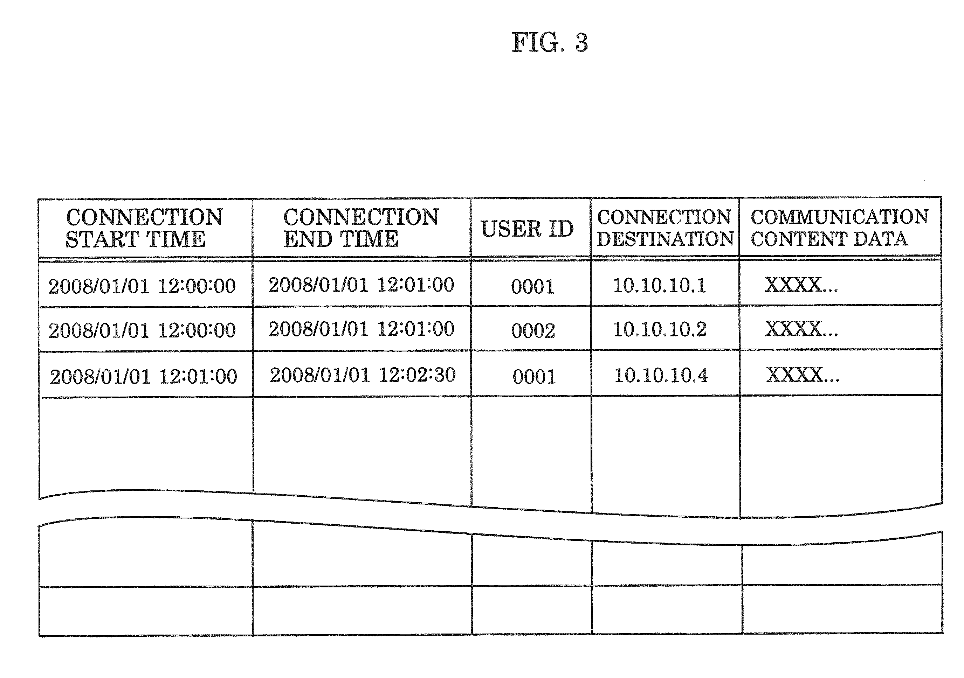

The communication content DB 42 stores the communication content information as described above. Fig. 3 is a diagram illustrating an example of the communication content information stored in the communication content DB 42. In the example of Fig. 3, the IP address of the content server 9 is stored as the address information on the connected server. As the connection start time, a time when a user (the user ID = 0001) has used the user terminal 15 to access the content server 9 and a communication session has been established is stored, and as the connection end time, a time when the communication session has been disconnected is stored.

The analysis unit 34 applies an analysis process to the data stored in the communication content DB 42, and stores analysis result data into the analysis result DB 43. In the analysis process, first, the analysis unit 34 extracts the communication content information stored in the communication content DB 42. Subsequently, the analysis unit 34 converts the IP address included as a connection destination field in the extracted communication content information, into a server name. At this time, the analysis unit 34 issues a name resolution request designating the IP address stored in this connection destination field, to the DNS server 8, and thereby obtains the server name (site name) corresponding to the IP address. This name resolution request is transmitted through the LAN-IF unit 32 of the HNB apparatus 11, the router 10 and the public network 7 to the DNS server 8.

Furthermore, the analysis unit 34 applies part of speech system analysis or the like to the communication content data included in the extracted communication content information, and thereby obtains information categories included in the communication content data. As the information categories, for example, information such as an address, a person's name, a telephone number, a place name and a product name is obtained. The part of speech system analysis is an analysis approach for decomposing a series of sentences into their component words, and then classifying them into parts of speech corresponding to the above described information categories, and is also referred to as "morphological analysis." For this part of speech system analysis, a function implemented in a general text mining tool may be used. The analysis unit 34 stores the communication content information including the information categories and a connected site name obtained in this way, in a state of being sorted by user, into the analysis result DB 43.

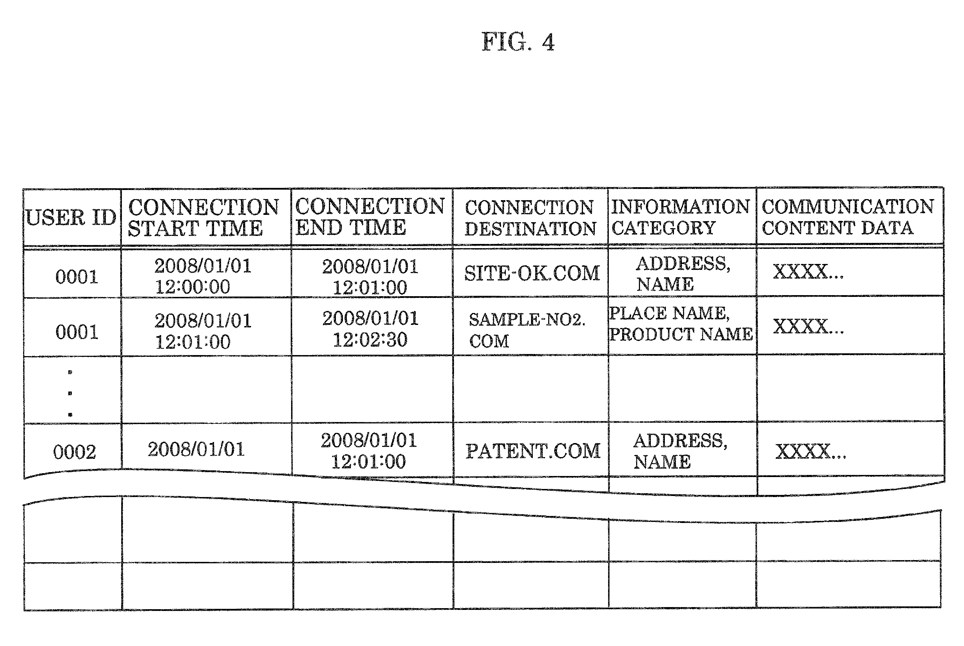

Fig. 4 is a diagram illustrating an example of the analysis result DB 43. In the example of Fig. 4, the server name converted from the IP address is stored in the connection destination field, and the information categories obtained from the communication content data are stored in an information category field. Respective entries are sorted by user.

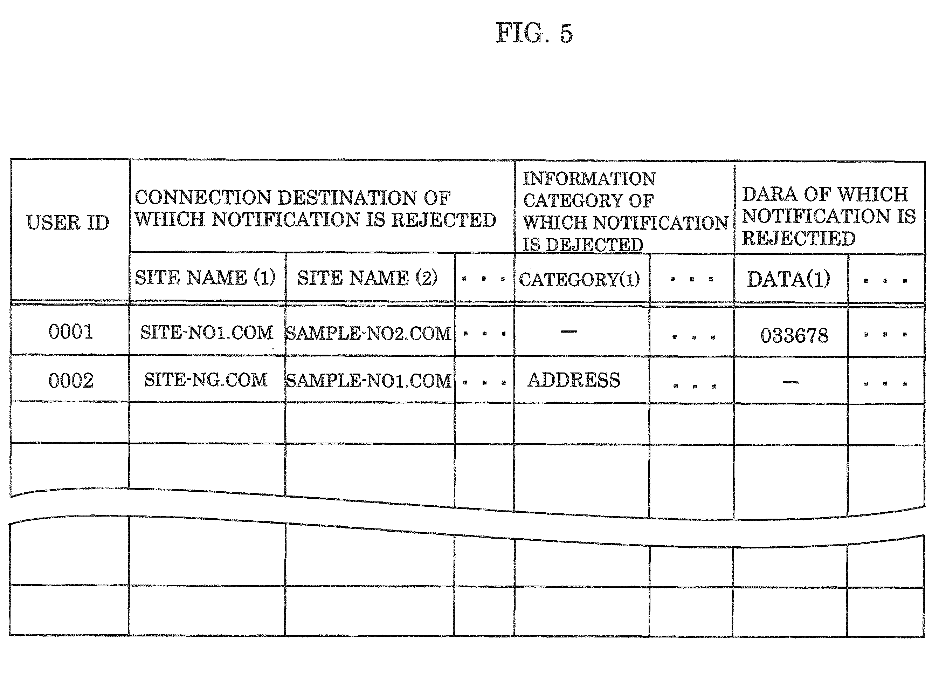

Subsequently, the analysis unit 34 obtains each user's filtering condition stored in the condition DB 40. Fig. 5 is a diagram illustrating an example of the condition DB 40. In the condition DB 40, information for specifying the communication content that the user does not want to notify a wireless carrier of is stored for each user. In the example of Fig. 5, a connected site name of which notification is rejected, an information category of which notification is rejected, and data of which notification is rejected are stored.

Upon obtaining each user's filtering condition from the condition DB 40, the analysis unit 34 uses this filtering condition to filter the data stored in the analysis result DB 43. A specific example of this filtering process will be described using the examples of Figs. 4 and 5. Two entries of the communication content information on a user A with the user ID "0001" are stored in the analysis result DB 43. In the filtering condition of the user A, two site names (SITE-NO1.COM, SAMPLE-N02.COM) are stored as connected sites of which notification is rejected, and data (033678) is stored as the data of which notification is rejected. Accordingly, in the filtering process, the analysis unit 34 deletes the entry with the connected site name °'SAMPLE-N02.COM°' in the entries of the user A stored in the analysis result DB 43.

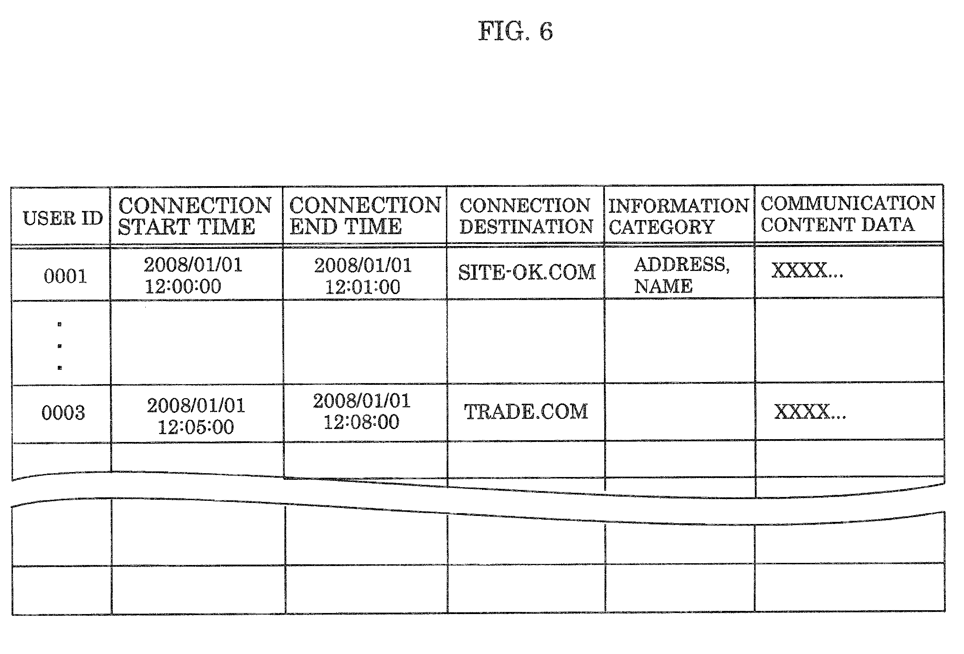

Fig. 6 is a diagram illustrating an example of the analysis result DB 43 after the filtering process. According to the example of Fig. 6, as described above, the entry of the communication content information with the connected site name "SAMPLE-N02.COM" has been deleted in the communication content information on the user ID "0001." Furthermore, also in the communication content information on the user ID "0002," the communication content information having "address," which is set in the information category of which notification is rejected, in its information category has been deleted. In this way, the analysis unit 34 stores information, in which the communication content information matching the filtering condition stored in the condition DB 40 has been deleted from all the communication content information stored in the communication content DB 42, into the analysis result DB 43.

If the analysis unit 34 judges that the filtering condition of the user stored in the analysis result DB 43 is not included in the filtering conditions obtained from the condition DB 40, the analysis unit 34 requests the condition setting unit 37 to obtain the user's filtering condition. The analysis unit 34 obtains a target user's filtering condition obtained in response to this request, and executes the above described filtering process.

The analysis unit 34 starts the analysis process as described above in a predetermined period, when an amount of the data stored in the communication content DB 42 becomes larger than a predetermined value, when there is a request from the base station control apparatus 2, and the like. If such a start event occurs, the analysis unit 34 obtains information related to a hardware resource usage status of the HNB apparatus 11, from the measurement unit 36. The analysis unit 34 determines a hardware load on the HNB apparatus 11 based on this obtained information, and executes the above described analysis process according to this determination. Specifically, as the hardware resource usage status, a CPU usage rate and a main storage memory usage rate are obtained, and if it is judged that the CPU usage rate and the main storage memory usage rate are equal to or less than predetermined thresholds, respectively, the analysis process is executed. Thereby, other processes can be prevented from being affected by the analysis process by the analysis unit 34. For example, if the user terminal 15 is making a telephone call through the HNB apparatus 11 or frequently performs the data communication, a hardware resource usage rate of the HNB apparatus 11 becomes high, and thus, the execution of the analysis process is avoided. The predetermined value is provided for each hardware resource, and is previously retained so as to be adjustable in a memory or the like. Note that it is not limited to use of the CPU usage rate and the main storage memory usage rate as data of the hardware resource usage status, and thus, other information may be used, or any one of the CPU usage rate and the main storage memory usage rate may be used.

The condition setting unit 37 stores each user's filtering condition into the condition DB 40. Each user's filtering condition is managed by the base station control apparatus 2, and latest data thereof is stored in a subscriber DB 66 of the base station control apparatus 2. Hence, upon receiving the request for obtaining the filtering condition, from the analysis unit 34, the condition setting unit 37 designates the user ID included in the request, and inquires of the base station control apparatus 2 about the user's filtering condition. This inquiry is transmitted through the LAN-IF unit 32 of the HNB apparatus 11 and the router 10 to the base station control apparatus 2. In response to this request, the condition setting unit 37 stores the filtering condition transmitted from the base station control apparatus 2, into the condition DB 40.

In order to reflect a latest filtering condition in the condition DB 40, the condition setting unit 37 may erase data of the filtering condition stored in the condition DB 40, in a predetermined period, depending on the number of times of receiving the request from the analysis unit 34, or the like. This is because, if the deletion has been performed, the latest filtering condition is obtained from the base station control apparatus 2 in response to the request from the analysis unit 34. As another aspect, if the filtering condition stored in the subscriber DB 66 of the base station control apparatus 2 has been changed, the condition setting unit 37 may be notified of information indicating content of the change, by the base station control apparatus 2.

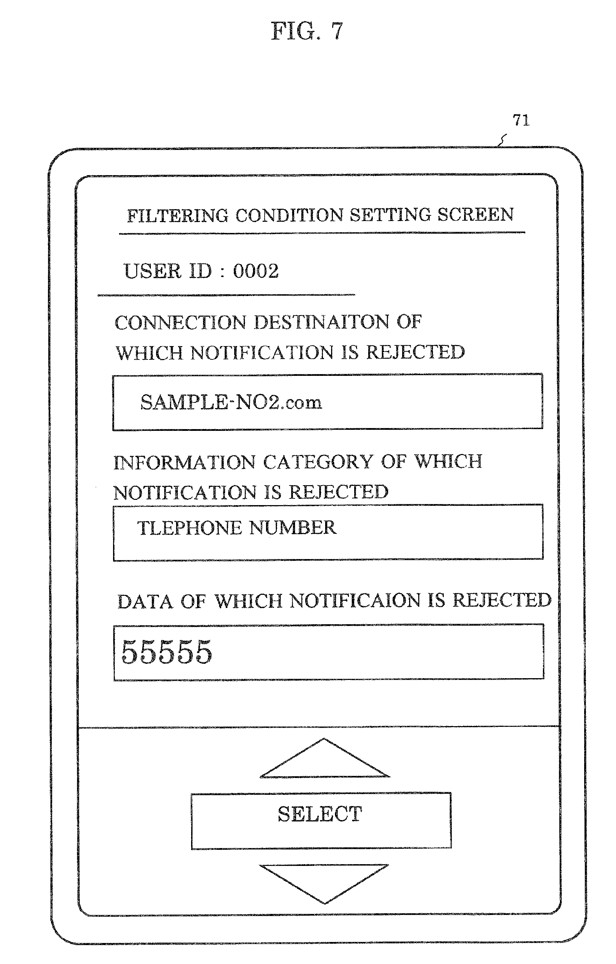

Furthermore, the condition setting unit 37 may cause the user to set the filtering condition. In this case, the condition setting unit 37 has a WEB server function, and provides a WEB page for displaying a filtering condition setting screen in response to the access from the user terminal 15. Fig. 7 is a diagram illustrating an example of the filtering condition setting screen. The user operates a WEB browser of the user terminal 15 to thereby designate a predetermined URL(Uniform Resource Locator) indicating the HNB apparatus 11, and thereby displays this filtering condition setting screen 71. The user inputs the site name, the information category, the data and the like of which notification is rejected, on this filtering condition setting screen 71. The condition setting unit 37 obtains the filtering condition inputted in this way, and stores the filtering condition into the condition DB 40. If the condition setting unit 37 has obtained the filtering condition inputted by the user, the condition setting unit 37 transfers it to the base station control apparatus 2, and thereby also reflects the inputted filtering condition in the subscriber DB 66.

The notification unit 35 transmits the communication content information stored in the analysis result DB 43, to the base station control apparatus 2. Transmission timings thereof include a predetermined period, a time when an amount of the data stored in the analysis result DB 43 becomes larger than a predetermined value, a time when there is a request from the base station control apparatus 2, and the like.

At the transmission timing, the notification unit 35 obtains information related to an amount of traffic between the HNB apparatus 11 and the wireless carrier network 1, from the measurement unit 36. If the obtained traffic amount is smaller than a predetermined value, the notification unit 35 transmits the communication content information stored in the analysis result DB 43, to the base station control apparatus 2. The predetermined value is set to a value so that a network load on the wireless carrier network 1 is not increased by a process for notifying the communication content information, and is previously retained so as to be adjustable in the memory or the like. Hence, the communication content information is transmitted to the base station control apparatus 2 while the amount of the traffic between the HNB apparatus 11 and the wireless carrier network 1 is small.

The measurement unit 36 measures the amount of the traffic between the HNB apparatus 11 and the wireless carrier network 1, the hardware resource usage rate of the HNB apparatus 11, and the like. Specifically, the measurement unit 36 monitors the data transmitted and received by the LAN-IF unit 32, and thereby specifies the traffic transmitted and received between the HNB apparatus 11 and the wireless carrier network 1, and measures the amount of this specified traffic. Moreover, the measurement unit 36 measures the CPU usage rate and the main storage memory usage rate of the HNB apparatus 11, and the like.

### [Base Station Control Apparatus]

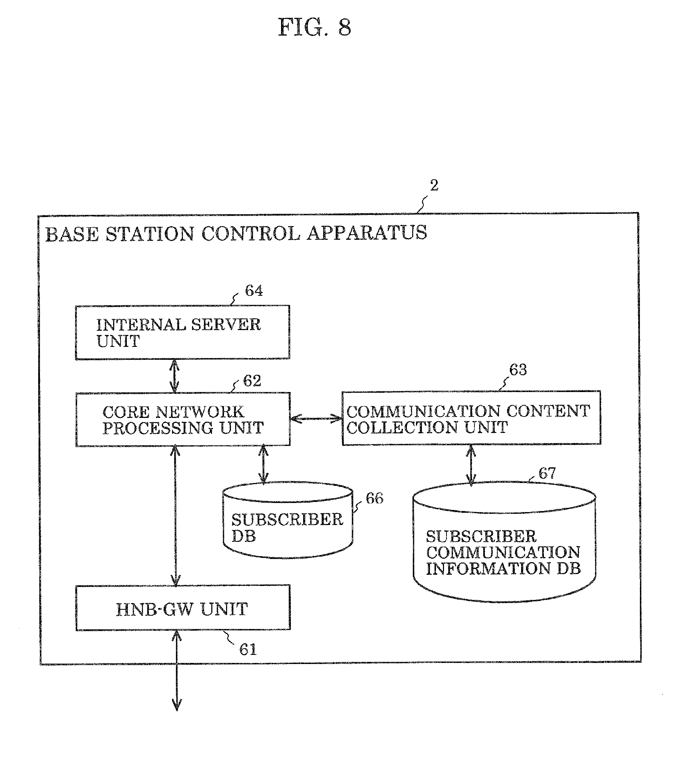

Fig. 8 is a block diagram illustrating a process configuration of the base station control apparatus 2. As illustrated in Fig. 8, the base station control apparatus 2 includes a GW unit for the HNB apparatus (hereinafter, represented as "HNB-GW unit") 61, a core network processing unit 62, a communication content collection unit 63, an internal server unit 64, the subscriber DB 66, a subscriber communication information DB 67 and the like. Each of these processing units of the base station control apparatus 2 is realized as a software component, or a hardware component, or a combination thereof (see the section of [Others]).

The HNB-GW unit 61 controls a connection port for the wireless carrier network 1, and terminates each communication with each HNB apparatus 11. The HNB-GW unit 61 is communicably connected to the HNB apparatus 11 through the wireless carrier network 1, the public network 7 and the router 10. Note that the HNB-GW unit 61 may be connected to the HNB apparatus 11 via a dedicated line instead of the public network 7.

The core network processing unit 62 has a GW function between various server apparatuses connected to the wireless carrier network 1 and the HNB-GW unit 61, between the internal server unit 64 and the HNB-GW unit 61, and between the communication content collection unit 63 and the HNB-GW unit 61. Moreover, the core network processing unit 62 manages the subscriber DB 66. If subscriber information is requested by the HNB apparatus 11 or other apparatuses, the core network processing unit 62 extracts the information on the requested subscriber from the subscriber DB 66, and transmits this extracted subscriber information to the requestor. If data update is requested, the core network processing unit 62 updates the data in the subscriber DB 66 in response to the request. Moreover, in order to store the user's billing information into the subscriber DB 66, the core network processing unit 62 may further have a function of managing the user's communication status.

The internal server unit 64 operates as a content server provided by the wireless carrier. The internal server unit 64 returns a predetermined WEB page in response to the access from the user terminal 15.

The subscriber DB 66 stores information related to subscribers subscribing to the wireless carrier. In addition to general wireless carrier subscriber information, each user's filtering condition used by the HNB apparatus 11 is stored in the subscriber DB 66. As described above, this filtering condition is inputted by the user using the user terminal 15. Moreover, this filtering condition is inputted by using a terminal by a person in charge of the service or the like in the wireless carrier. Screen data for inputting the filtering condition may be provided to this terminal by the internal server unit 64.

The communication content collection unit 63 obtains the communication content information notified by the notification unit 35 of the HNB apparatus 11, and stores this obtained information into the subscriber communication information DB 67. The communication content collection unit 63 may voluntarily request the communication content information of the HNB apparatus 11 at a predetermined timing.

The subscriber communication information DB 67 stores the communication content information notified by the notification unit 35 of the HNB apparatus 11. The subscriber communication information DB 67 may have a schema similar to the analysis result DB 43 of the HNB apparatus 11, or may have its own schema for storing just needed information.

### [Operation Example]

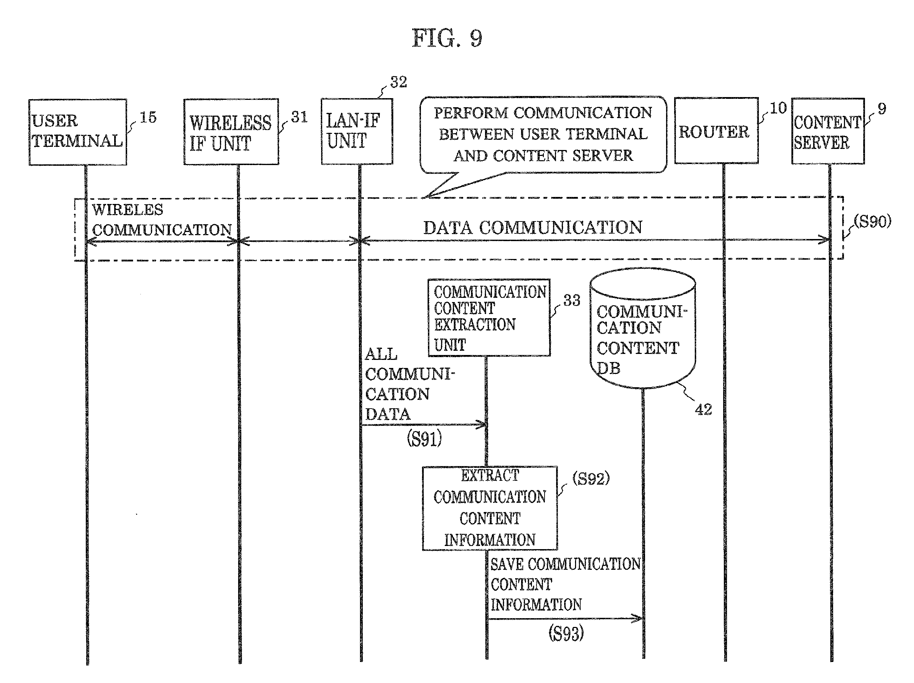

Hereinafter, an operation example of the mobile communication system in Example 1 will be described using Fig. 9 to Fig. 12.

Fig. 9 is a sequence chart illustrating a process for saving the communication content information in Example 1. If the user terminal 15 is within the femto cell formed by the HNB apparatus 11, the user terminal 15 accesses the content server 9 through the HNB apparatus 11 by wirelessly connecting to the HNB apparatus 11. At this time, the HNB apparatus 11 directly transfers the communication data from the user terminal 15 to the content server 9 connected to the public network 7, without transmitting it to the wireless carrier network 1. Specifically, upon receiving a wireless signal conveying the communication data from the user terminal 15, the wireless IF unit 31 transmits the communication data obtained from the wireless signal, to the LAN-IF unit 32. If the LAN-IF unit 32 judges that this communication data indicates a request for accessing the content server 9, the LAN-IF unit 32 directly transfers the communication data through the router 10 to the content server 9. In this way, according to the local breakout function of the HNB apparatus 11, the communication between the user terminal 15 and the content server 9 is performed through the HNB apparatus 11 and the router 10 (S90).

In the HNB apparatus 11, when transferring the communication data transmitted and received between the user terminal 15 and the content server 9, the LAN-IF unit 32 sequentially transmits the communication data to the communication content extraction unit 33 (S91). The communication content extraction unit 33 processes a plurality of pieces of the communication data transmitted from the LAN-IF unit 32, in the predetermined units of communication, and thereby extracts the communication content information for each predetermined unit of communication (S92). The communication content information includes the user ID for specifying the user terminal 15, the address information on the content server 9, the connection start time and the connection end time of the communication, and the communication content data. Here, the communication content data is the payload data that is the communication data excluding the various headers. The communication content extraction unit 33 stores the communication content information extracted in this way, into the communication content DB 42 (S93).

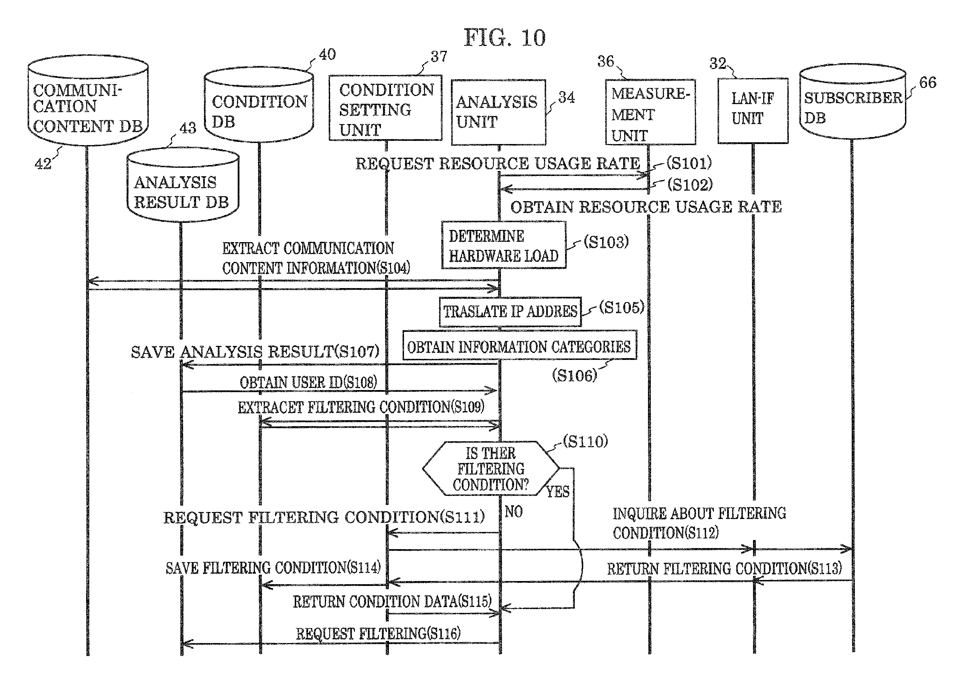

Fig. 10 is a sequence chart illustrating the analysis process and the filtering process for the communication content information in Example 1. The analysis unit 34 executes a process as follows if a predetermined event occurs. The predetermined event includes an event in which the amount of the data of the communication content information stored in the communication content DB 42 becomes larger than the predetermined value, an event in which an analysis request is received from the base station control apparatus 2, an event in which the predetermined period comes, and the like.

The analysis unit 34 first requests, to the measurement unit 36, the information related to the hardware resource usage status of the HNB apparatus 11 (S101). In response to this request, the measurement unit 36 measures the CPU usage rate and the main storage memory usage rate of the HNB apparatus 11, and returns hardware resource usage status information including them to the analysis unit 34 (S102).

The analysis unit 34 determines the hardware load on the HNB apparatus 11, based on the obtained hardware resource usage status information (S103). Specifically, the analysis unit 34 confirms that the CPU usage rate of the HNB apparatus 11 is equal to or less than the predetermined threshold (for example, 30%), and that the main storage memory usage rate of the HNB apparatus 11 is equal to or less than the predetermined threshold (for example, 50%). If the analysis unit 34 judges that the CPU usage rate is equal to or less than the predetermined threshold, and that the main storage memory usage rate is equal to or less than the predetermined threshold, the hardware load is low, and thus, the analysis unit 34 decides to start the analysis process. On the other hand, if the analysis unit 34 judges that the CPU usage rate is larger than the predetermined threshold, or that the main storage memory usage rate is larger than the predetermined threshold, the analysis unit 34 judges that the hardware load is high. If the analysis unit 34 judges that the hardware load is high, the analysis unit 34 waits for a predetermined time (for example, 10 minutes), and then performs the determination of the hardware load again, based on new hardware resource usage status information (S101, S102 and S103).

According to the determination as described above, if the analysis unit 34 determines that the hardware load on the HNB apparatus 11 is low, the analysis unit 34 extracts the communication content information from the communication content DB 42 (S104). The analysis unit 34 converts each IP address stored in the connection destination field of the extracted communication content information, into each server name (S105). The server name is obtained, for example, by requesting name resolution of the DNS server 8.

The analysis unit 34 further applies the part of speech system analysis or the like to the communication content data included in the extracted communication content information, and thereby obtains the information categories included in the communication content data (S106). The analysis unit 34 saves the communication content information, in which the IP address has been converted into the server name and the obtained information categories are included, as an analysis result in a state of being sorted by user ID, into the analysis result DB 43 (S107).

Next, the analysis unit 34 extracts the user ID of each piece of the communication content information from the analysis result DB 43 (S108). The analysis unit 34 extracts the filtering condition for each extracted user ID from the condition DB 40 (S109). The analysis unit 34 determines whether or not there is the filtering condition for each user ID, based on the extracted data (S110). If there is any user ID without the filtering condition (S110; NO), the analysis unit 34 requests the condition setting unit 37 to obtain the filtering condition by designating the user ID without the filtering condition (S111).

Upon receiving the request from the analysis unit 34, the condition setting unit 37 designates the user ID included in the request, and inquires of the base station control apparatus 2 about the user's filtering condition (S112). This inquiry is transmitted through the LAN-IF unit 32 of the HNB apparatus 11 and the router 10 to the base station control apparatus 2 in the wireless carrier network 1. In the base station control apparatus 2, the core network processing unit 62 receives an inquiry message for the filtering condition through the HNB-GW unit 61. The core network processing unit 62 extracts the filtering condition of the user ID included in this inquiry message, from the subscriber DB 66. The core network processing unit 62 sends out the extracted filtering condition through the HNB-GW unit 61 to the HNB apparatus 11.

In the HNB apparatus 11, the condition setting unit 37 receives the filtering condition transmitted from the base station control apparatus 2, through the LAN-IF unit 32 (S113). The condition setting unit 37 stores this received filtering condition into the condition DB 40 after the filtering condition is associated with the corresponding user ID by the condition setting unit 37 (S114), and the condition setting unit 37 also transmits the filtering condition to the analysis unit 34 (S115). Thereby, the analysis unit 34 obtains the filtering condition of the user ID whose filtering condition has been determined not to exist.

Upon obtaining the filtering conditions for all the user IDs, the analysis unit 34 applies each user ID's filtering condition to each piece of the communication content information stored in the analysis result DB 43 (S116). Thereby, the communication content information with the server name matching the connected site name of which notification is rejected, which is included in the filtering condition, the communication content information with the information category matching the information category of which notification is rejected, which is included in the filtering condition, and the communication content information with the communication content data including the data of which notification is rejected, which is included in the filtering condition, are deleted from the analysis result DB 43.

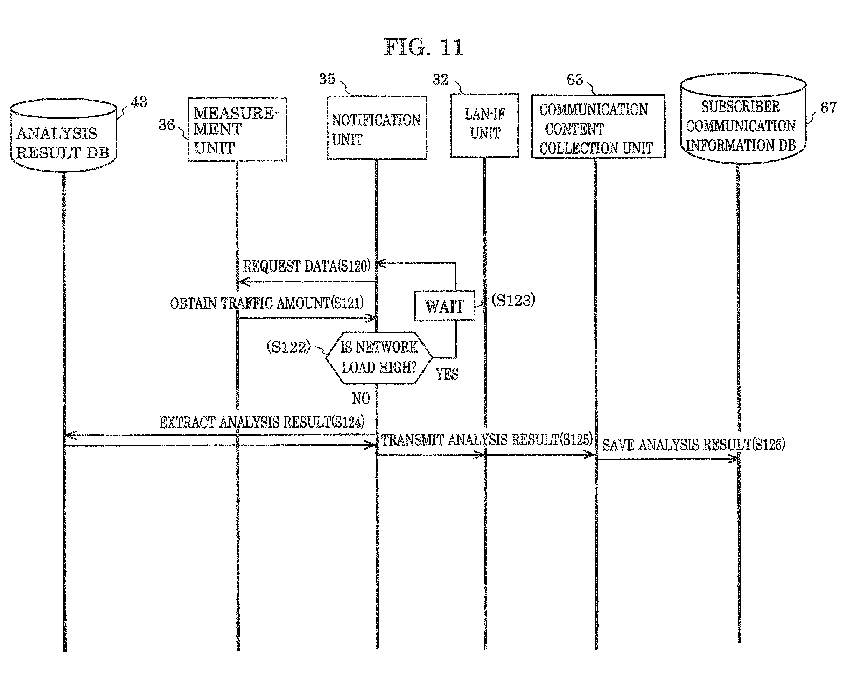

Fig. 11 is a sequence chart illustrating a process for notifying the analysis result in Example 1. When a predetermined event occurs, the notification unit 35 executes the process for notifying the analysis result as follows. The predetermined event includes an event in which the amount of the data stored in the analysis result DB 43 becomes larger than the predetermined value, an event in which a notification request is received from the base station control apparatus 2, an event in which the predetermined period comes, and the like.

The notification unit 35 first requests the information related to the traffic amount of the measurement unit 36 (S120). In response to this request, the measurement unit 36 measures the amount of the traffic between the HNB apparatus 11 and the wireless carrier network 1, and returns information on the measured traffic amount to the notification unit 35 (S121).

The notification unit 35 determines a network load between the HNB apparatus 11 and the wireless carrier network 1, based on the obtained traffic amount (S122). Specifically, the notification unit 35 confirms that an upstream traffic amount from the HNB apparatus 11 to the wireless carrier network 1 is equal to or less than a predetermined threshold (for example, 5 Mbps(Mega bit per second)), and that a downstream traffic amount from the wireless carrier network 1 to the HNB apparatus 11 is equal to or less than a predetermined threshold (for example, 5 Mbps). If the notification unit 35 judges that both the upstream traffic amount and the downstream traffic amount are equal to or less than the predetermined thresholds, the network load between the HNB apparatus 11 and the wireless carrier network 1 is low (S122; NO), and thus, the notification unit 35 decides to perform the notification of the analysis result. On the other hand, if the notification unit 35 judges that the upstream traffic amount or the downstream traffic amount is larger than the predetermined threshold, the notification unit 35 judges that this network load is high. If the notification unit 35 judges that the network load is high (S122; YES), the notification unit 35 waits for a predetermined time (for example, 10 minutes) (S123), and then performs the determination of the network load again, based on new traffic amount information (S120, S121 and S122).

According to the determination as described above, if the notification unit 35 determines that the network load between the HNB apparatus 11 and the wireless carrier network 1 is low (S122; NO), the notification unit 35 extracts the analysis result from the analysis result DB 43 (S124). The notification unit 35 transmits the extracted analysis result through the LAN-IF unit 32 to the base station control apparatus 2 (S125).

In the base station control apparatus 2, the communication content collection unit 63 obtains the data of the analysis result notified by the HNB apparatus 11, through the HNB-GW unit 61 and the core network processing unit 62. Such data of the analysis results is transmitted from a plurality of the HNB apparatuses 11. The communication content collection unit 63 stores the data of the analysis results collected in this way, into the subscriber communication information DB 67 (S126).

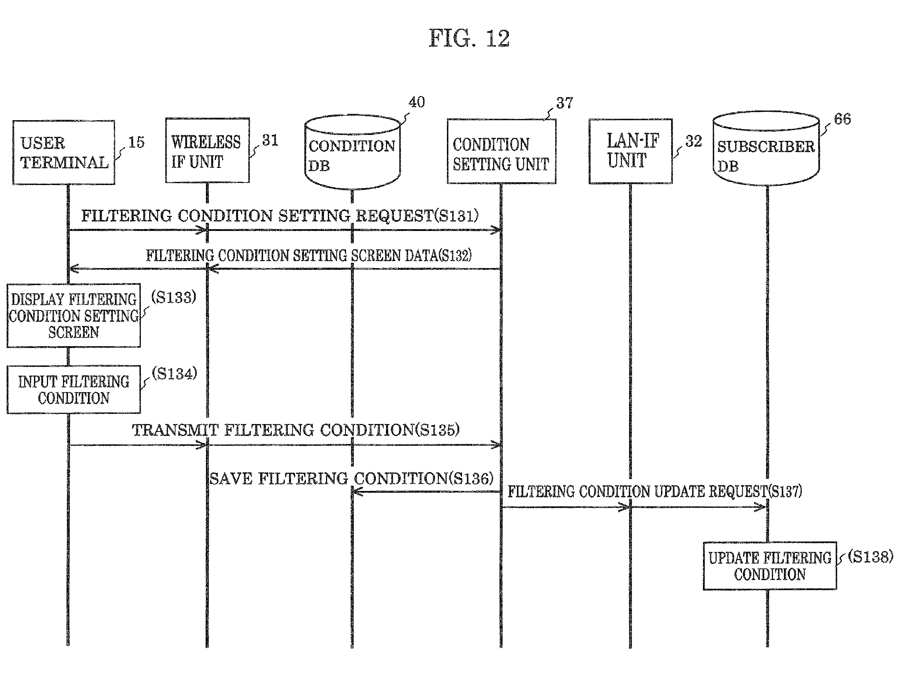

Fig. 12 is a sequence chart illustrating a process for updating the filtering condition in Example 1. As illustrated in Fig. 12, the user accesses the HNB apparatus 11 by operating the user terminal 15. Through this access, a request message for setting the filtering condition is wirelessly transmitted from the user terminal 15 to the HNB apparatus 11 (S131). In the HNB apparatus 11, the condition setting unit 37 receives this request message through the wireless IF unit 31 and the LAN-IF unit 32, and transmits screen data for displaying the filtering condition setting screen (S132). This screen data is, for example, HTML data.

Upon receiving this screen data, the user terminal 15 displays the filtering condition setting screen (see Fig. 7) on the display of the user terminal 15 (S133). The user inputs various kinds of the filtering condition on the filtering condition setting screen by operating the button or the like of the user terminal 15 (S134). The filtering condition includes, for example, the connected site name of which notification is rejected, the information category of which notification is rejected, the data of which notification is rejected, and the like. Filtering condition data inputted on the filtering condition setting screen is wirelessly transmitted along with the user ID for specifying the user, from the user terminal 15 to the HNB apparatus 11, and is received by the condition setting unit 37 of the HNB apparatus 11 (S135).

Upon obtaining the user ID and the filtering condition, the condition setting unit 37 saves the obtained filtering condition into a record specified by the user ID in the condition DB 40 (S136). When the storage into the condition DB 40 is completed, the condition setting unit 37 transmits an update request to the base station control apparatus 2, in order to cause the subscriber DB 66 to register the filtering condition (S137). This update request is sent out from the HNB apparatus 11 through the LAN-IF unit 32, and is received by the base station control apparatus 2 through the router 10 and the wireless carrier network 1.

In the base station control apparatus 2, the core network processing unit 62 receives this update request through the HNB-GW unit 61, and saves the filtering condition included in this update request, into a record specified by the user ID that is similarly included (S138). Thereby, the filtering condition inputted in the user terminal 15 is stored in the subscriber DB 66 as wireless carrier equipment. After the storing, even if the user terminal 15 performs the data communication through another HNB apparatus 11 or another NB apparatus 5, the latest filtering condition stored in the subscriber DB 66 is applied.

### <Operation and Effect of Example 1>

In the mobile communication system in Example 1, the communication data transmitted and received between the user terminal 15 within the femto cell and the content server 9 is relayed by the wireless IF unit 31 and the LAN-IF unit 32 of the HNB apparatus 11 forming this femto cell. In the HNB apparatus 11, the communication content extraction unit 33 couples the communication data relayed in this way, in the predetermined units of communication, thereby obtains the communication content information for each predetermined unit of communication, and stores the obtained communication content information into the communication content DB 42.

Furthermore, in the HNB apparatus 11, the analysis unit 34 analyzes the communication content information stored in the communication content DB 42, and thereby, the information categories indicating the communication content of the communication content information are obtained. Similarly, the IP address in this communication content information is converted into the server name obtained from the DNS server 8. Subsequently, the analysis unit 34 extracts the filtering condition for each user terminal from the condition DB 40, and applies this filtering condition to the communication content information including the server name, the information categories and the like. Thereby, the communication content information matching this filtering condition is deleted, and remaining communication content information is stored in the analysis result DB 43. This communication content information stored in the analysis result DB 43 is notified to the base station control apparatus 2 in the wireless carrier network 1 by the notification unit 35 of the HNB apparatus 11, and is stored in the subscriber communication information DB 67.

Thereby, the wireless carrier can analyze this communication content information of each user stored in the subscriber communication information DB 67, and thereby obtain marketing information, such as the user's preference and interest. This is also enabled even if the HNB apparatus 11 transfers the communication data to the content server 9 by means of local breakout, not through the wireless carrier network 1.

Furthermore, this communication content information stored in the subscriber communication information DB 67 is information filtered according to the filtering condition for the user terminal 15, and thus does not include content that the user does not want the wireless carrier to refer to. Therefore, according to Example 1, since only the communication content permitted by the user, in the communication content of the user, can be provided to the wireless carrier, a viewpoint of personal information protection is also satisfied.

Furthermore, the analysis and the filtering of the communication content information are performed in each HNB apparatus 11, and the analysis result is transmitted from each HNB apparatus 11 to the base station control apparatus 2. Therefore, according to Example 1, a processing load on the wireless carrier network 1 side can be reduced, and also the network load can be reduced.

Moreover, in Example 1, when judging that the network load between the apparatus itself and the wireless carrier network 1 is low, based on the traffic amount measured by the measurement unit 36, the notification unit 35 of the HNB apparatus 11 transmits this analysis result. Therefore, according to Example 1, the network load on the wireless carrier network 1 can be prevented from concentrating due to the notification of the analysis result, eliminating adverse effects on other traffic.

Similarly, in Example 1, when judging that the hardware load on the HNB apparatus 11 is low, based on the hardware resource usage status of the apparatus itself that has been measured by the measurement unit 36, the analysis unit 34 of the HNB apparatus 11 performs the analysis process and the filtering process for the communication content information. Therefore, according to Example 1, it is possible to prevent a processing load associated with the communication content information from affecting on other processes in the HNB apparatus 11.

Moreover, in Example 1, the condition setting unit 37 of the HNB apparatus 11 transmits the screen data of the filtering condition setting screen to the user terminal 15, which enables the filtering condition of each user to be set in the user terminal 15. Moreover, the filtering condition is managed in the subscriber DB for the wireless carrier network 1, and this filtering condition is provided to the HNB apparatus 11. Thereby, even if the user terminal 15 wirelessly connects to another HNB apparatus 11 or another NB apparatus 5, the latest filtering condition can be applied.

### [Variation]

In the Example 1, information for specifying the communication content information of which notification to the wireless carrier is rejected by the user is stored as the filtering condition in the condition DB 40. As a variation, information for specifying communication content information of which notification is permitted by the user may be stored as the filtering condition in the condition DB 40. In a case of this variation, the analysis unit 34 may store only the communication content information matching the filtering condition obtained from the condition DB 40, into the analysis result DB 43.

In the Example 1, as illustrated in Fig. 2, the example is illustrated where the HNB apparatus 11 includes the condition DB 40, the communication content DB 42 and the analysis result DB 43. However, they may not take a form of a database that is constantly retained, and may take such a form of a buffer or that like that is temporarily retained. In this case, the HNB apparatus 11 may not include the condition DB 40, the communication content DB 42 and the analysis result DB 43.

Moreover, in Example 1, the example is illustrated where the router 10 and the HNB apparatus 11 are configured as separate apparatuses. However, the GW unit 21 of the router 10 may be included in the HNB apparatus 11, and thereby, the router 10 may be omitted in the system configuration.

Moreover, in Example 1, the example is illustrated where the base station control apparatus 2 in the wireless carrier network 1 receives the communication content information from each HNB apparatus 11. However, as long as the wireless carrier can refer to the received communication content information, this communication content information may be received by another apparatus.

### [Others]

### <Regarding Hardware Component and Software Component>

The hardware component is a hardware circuit, examples of which include a field programmable gate array (FPGA), an application specific integrated circuit (ASIC), a gate array, a combination of logical gates, a signal processing circuit, and an analog circuit.

The software component is a part (piece) that realizes the above described processes as software, and is not a concept that limits a language, a development environment and the like that realize the software. Examples of the software component include a task, a process, a thread, a driver, firmware, a database, a table, a function, a procedure, a subroutine, a predetermined part of a program code, a data structure, an array, a variable, and a parameter. These software components are realized on one or more memories (one or more processors (for example, CPUs, DSPs(Digital Signal Processor) or the like).

Note that each embodiment described above does not limit an approach for realizing the processing units described above. The processing units may be configured as the above described hardware component or software component, or the combination thereof, according to an approach that can be realized by a person of ordinary skill in the art.

## Claims

1. A base station apparatus, comprising:
a relay unit that relays communication data transmitted and received between a user terminal wirelessly connected to the base station apparatus itself, and a server apparatus connected to the base station apparatus itself through a public network;
an extraction unit that extracts communication content information indicating content of communication between the user terminal and the server apparatus, from the communication data relayed by the relay unit;
a condition obtaining unit that obtains a filtering condition for the user terminal;
an analysis unit that filters a plurality of pieces of the communication content information extracted by the extraction unit, according to the filtering condition obtained by the condition obtaining unit; and
a notification unit that notifies a wireless carrier network of communication content information obtained by the analysis unit applying the filtering condition.

2. The base station apparatus according to claim 1, further comprising:
a communication unit that processes communication performed with the wireless carrier network; and
a measurement unit that measures an amount of the communication performed with the wireless carrier network and processed by the communication unit,
wherein when the amount of the communication measured by the measurement unit is less than a predetermined amount, the notification unit notifies the wireless carrier network of the communication content information.

3. The base station apparatus according to claim 1 or 2, wherein
the analysis unit analyzes the communication content information to extract an information category indicating the communication content included in the communication content information, and performs the filtering by using the extracted information category and the filtering condition.

4. The base station apparatus according to claim 3, wherein
the measurement unit measures a hardware resource usage rate in the base station apparatus, and
if the hardware resource usage rate measured by the measurement unit is lower than a predetermined value, the analysis unit executes a process for extracting the information category and a process for filtering.

5. The base station apparatus according to any one of claims 1 to 4, wherein
the condition obtaining unit obtains the filtering condition for the user terminal from a subscriber database included in the wireless carrier network.

6. The base station apparatus according to claim 5, wherein
the condition obtaining unit includes:
a screen transmission unit that transmits screen data for causing a user to set the filtering condition, to the user terminal; and
a condition transmission unit that transmits the filtering condition inputted through a screen displayed on the user terminal based on the screen data, to the wireless carrier network store the filtering condition into the subscriber database.

7. A data processing apparatus that is communicably connected to a plurality of base station apparatuses each relaying communication data transmitted and received between a user terminal wirelessly connected to the base station apparatus itself, and a server apparatus connected to the base station apparatus itself through a public network, the data processing apparatus comprising:
a condition storage unit that stores a filtering condition for each user terminal;
a condition transmission unit that transmits the filtering condition stored in the condition storage unit, to the plurality of base station apparatuses; and
a reception unit that receives communication content information obtained by applying the filtering condition to communication content information extracted from the communication data transmitted and received between the user terminal and the server apparatus, from each of the plurality of base station apparatuses.

8. A mobile communication system comprising a plurality of base station apparatuses, and a data processing apparatus communicably connected to the plurality of base station apparatuses, wherein
each of the plurality of base station apparatuses comprises:
a relay unit that relays communication data transmitted and received between a user terminal wirelessly connected to the base station apparatus itself, and a server apparatus connected to the base station apparatus itself through a public network;
an extraction unit that extracts communication content information indicating content of communication between the user terminal and the server apparatus, from the communication data relayed by the relay unit;
a condition obtaining unit that obtains a filtering condition for the user terminal;
an analysis unit that filters a plurality of pieces of the communication content information extracted by the extraction unit, according to the filtering condition obtained by the condition obtaining unit; and
a notification unit that notifies the data processing apparatus of communication content information obtained by the analysis unit applying the filtering condition, and
the data processing apparatus comprises:
a condition storage unit that stores the filtering condition for each user terminal;
a condition transmission unit that transmits the filtering condition stored in the condition storage unit, to the plurality of base station apparatuses; and
a reception unit that receives a plurality of pieces of the communication content information provided from the respective notification units of the plurality of base station apparatuses, respectively.

9. A method of processing communication data by a base station apparatus, the method comprising:
relaying communication data transmitted and received between a user terminal wirelessly connected to the base station apparatus itself, and a server apparatus connected to the base station apparatus itself through a public network;
extracting communication content information indicating content of communication between the user terminal and the server apparatus, from the relayed communication data;
obtaining a filtering condition for the user terminal;
filtering a plurality of pieces of the extracted communication content information according to the obtained filtering condition; and
notifying a wireless carrier network of communication content information obtained by performing the filtering.
